# EUROPEAN PATENT SPECIFICATION

(11) **EP 0 607 744 B1**
(45) Date of publication and mention of the grant of the patent: **03.09.1997**
(21) Application number: 93610062.7
(22) Date of filing: 24.11.1993
(51) Int. Cl.: A22B 5/00

(54) **Method and apparatus for moving hog carcass sides from a suspended vertical position to a horizontal position and for making a controlled cutting of the hind foot**
Verfahren und Vorrichtung zum Fördern von Schweinekarkassehälften von einer hängenden vertikalen Position zu einer horizontalen Position und zum Abschneiden des Hinterfusses
Procédé et appareil pour transporter des demi-carcasses de porc suspendues d'une position verticale à une position horizontale et pour découper la patte arrière

(30) Priority: 03.12.1992 DK 1451/92
(43) Date of publication of application: 27.07.1994
(73) Proprietor: Slagteriernes Forskningsinstitut, DK-4000 Roskilde (DK)
(72) Inventor: Christensen, Hardy, DK-4330 Hvalso (DK); Folkmann, Peter, Stubberup, DK-4140 Borup (DK)
(74) Representative: Schoenning, Soeren

(56) References cited:
- US-A- 3 916 484
- US-A- 4 557 014
- US-A- 4 662 029

## Description

The present invention relates to a method for treatment of pig carcasses, in which a pair of carcass sides suspended at their hind feet in a gambrel is conveyed on an overhead conveyor, which moves above a conveyor belt, onto which the carcass sides are transferred when released from the gambrel, and by which method the hind feet are automatically cut off.

In slaughter houses pig carcasses are suspended at their hind feet on a gambrel after removal of the bristles by a socalled dehairing machine.

The further treatment of the carcass until the cutting up of the split carcass takes place while the carcasses thus suspended are conveyed along an overhead conveyor in form of a slide bar. In connection with the cutting up the carcass sides are put down in pairs on a cutting belt by lowering the carcasses and pulling them in a direction transversely to the belt, until the front part and the loin are in alignment with the conveyor belt, after which the hind feet are pressed or pushed free of the ends of the gambrel and the ham end of the carcass falls down on the conveyor belt. After the transfer the hind feet are manually cut off.

This method suffers from the drawback that the transfer of the carcass side onto the conveyor belt takes place with such considerable variation that the succeeding carcass sides have to be moved and aligned and the cutting off of the hind feet has to take place while the carcasses lie on their side on the conveyor belt with the hind feet in a not right angle relative to the conveyor belt, the hind feet thus having to be turned into a right angle by the operator during the cutting off.

Several types of semiautomatic equipment for the sawing off of the hind feet of the pig carcass have been tested in connection with the cutting of the carcass in a lying position, but the cutting accuracy has turned out to be worse than in case of manual cutting.

From US Patent No. 4,662,029 an apparatus for automatic primal cutting of pig carcass sides, including the sawing off of the hind feet of the pig carcasses, is known. In the known apparatus the carcass sides are transferred to a horizontal conveyor belt from a conveyor, on which they are conveyed suspended in pairs in a gambrel at a hind foot. The cutting off of the hind foot takes place automatically after the transfer on basis of a measurement made by an optic scanner, from which a signal for adjustment of a rotating knife is emitted. The arrangement is complicated and consequently vulnerable. Furthermore, the hind foot is not secured during the cutting, and there is therefore a certain risk that the hind foot will move during the cutting, the incision thus partly not being clean and partly not placed as anticipated by the measurement.

It is the object of the invention to provide a method, by which the hind feet can be sawed off automatically with good accuracy and with a clean cut running perpendicularly to the hind foot without the use of complicated equipment for optic scanning.

This object is met according to the invention by a method according to claim 1.

The method exploits the condition that the hind feet so to speak are fixed on the gambrel during the transfer on account of the fact that the weight of the carcass during the intial step is only partially transferred to the conveyor belt and that the position of the hind feet is known, the gambrel serving as reference point in connection with the cutting. Due to the fixation a clean cut running perpendicular to the hind foot is attained, and the pull in the leg due to the reduced weight contributes to the attainment of the correctly running cut.

In practice the method is either carried out by the gambrels passing stationarily mounted circular saws, the circular saws being placed outside the travelling path of the gambrels, or thereby that the circular saws are pivotally mounted and advanced in a predetermined position of the gambrel in a direction substantially perpendicular to the vertical plane of the overhead conveyor.

The latter possibility is used in an embodiment, which is characteristic in that the hind feet are cut at a predetermined distance from the gambrel.

It has turned out that by such a sawing at a fixed distance from the bottom side of the gambrel a surprisingly accurate cutting of the hind feet is achieved, the position of the cut being at a distance with very little variation from the suspension point of the carcass.

The method according to the invention may for instance be carried out in a way in which the carcass sides are automatically transferred transversely to the conveyor belt, until the ham ends are a few cm over the belt. While the hind feet are still hanging on the gambrel in a well-defined direction, and the rind side of the ham end has not yet been turned downwards automatically, the hind feet are sawed off perpendicularly to their longitudinal direction at a predetermined distance from the gambrel in such a way that the ham end falls down the last cm onto the belt and the rind side faces the belt. The gambrel is then advanced further along the overhead conveyor and is later freed from the back feet.

The invention also relates to an apparatus for treatment of pig carcasses by use of the method according to the invention and comprising an overhead conveyor, along which pairs of carcass sides are conveyed suspended at their hind feet in a gambrel and a conveyor belt placed below the overhead conveyor and onto which the carcass sides are transferred by release of the carcass sides from the gambrel in a position above the conveyor belt whereby the overhead conveyor in the area, where the transfer is to take place, is placed at a distance therefrom which corresponds to a shifting of an essential part of the weight of the carcass sides to the conveyor belt. The apparatus according to the invention is characterised in that in this area two cutting devices for cutting off the hind feet from the carcass sides are provided.

Advantageous embodiments of the apparatus can be seen from claims 7-9.

In a preferred embodiment of the apparatus the transfer arrangement comprises guiding and/or supporting devices for controlling or holding the gambrel and/or the hind feet relative to the cutting devices during the transfer. In this way the gambrel can convey the carcass sides in a predetermined height and position in such a way that two saws may saw through the hind feet to free the carcass sides from hind feet and gambrels and to bring them to rest on the underlying conveyor belt.

A holding means may - if desired - be provided, said holding means holding the gambrel with the carcass sides in a predetermined position, as well as two movable saws which saw through the hind feet while the carcass sides are held by the holding means.

The invention will be described in detail in the following with reference to the drawing, in which
Figs. 1 and 2 show a traditional transfer apparatus, seen from two different angles,
Figs. 3 and 4 show schematically an embodiment of a transfer apparatus according to the invention, seen from the same angle as the transfer apparatus in Figs. 1 and 2, and
Figs. 5 and 6 show schematically an embodiment of a transfer apparatus according to the invention, seen from the same angle as the transfer apparatus according to Figs. 1 and 2.

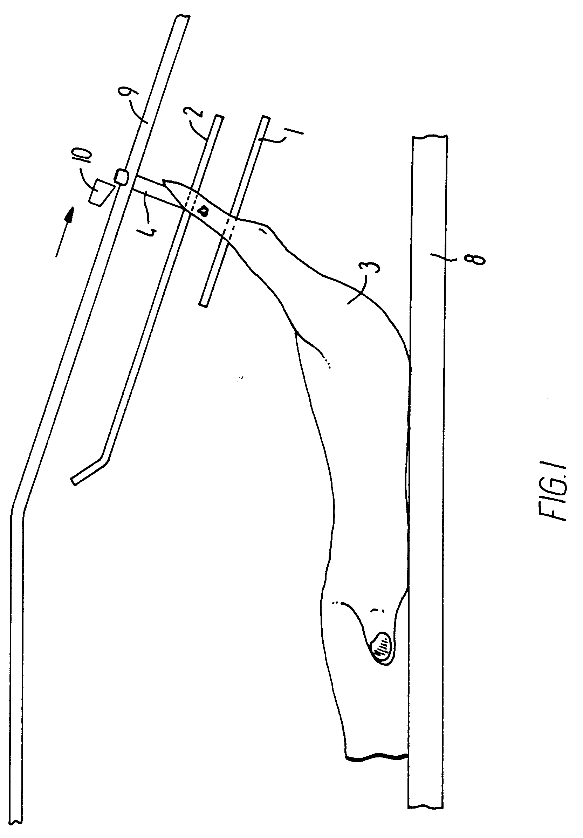

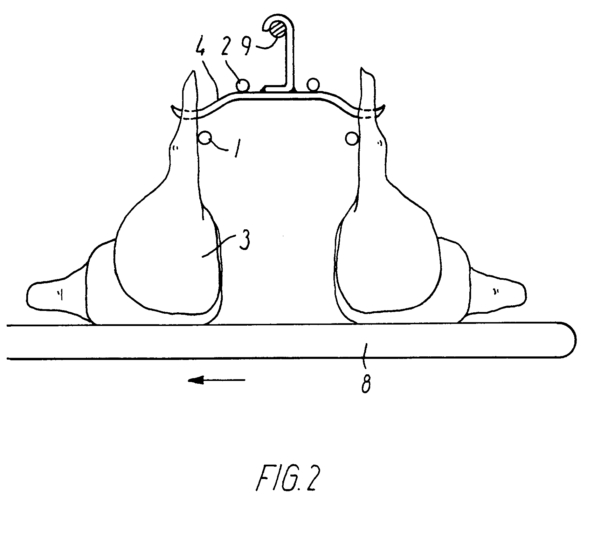

In the traditional transfer apparatus in Figs. 1 and 2 carcass sides 3 are conveyed along an overhead conveyor, for instance a slide rail, by means of a guide 10 transversely over a conveyor belt 8, while hanging in a gambrel 4. Two guide bars 2 hold the gambrel fairly horizontally. When the gambrel has reached a predetermined position, two inclined arms 1 press the hind feet free from the gambrel and the two carcass sides fall down on the conveyor belt.

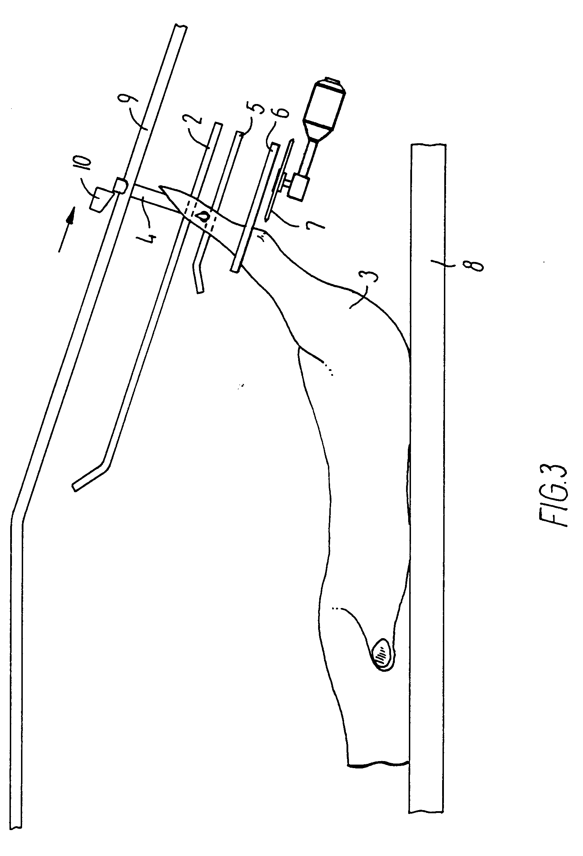

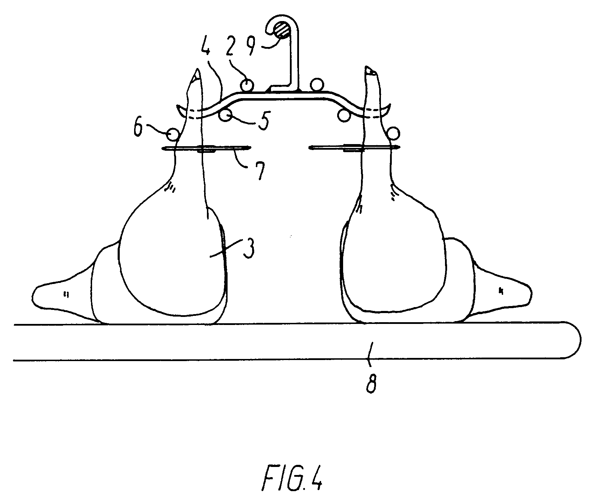

According to the invention the transfer apparatus has been amended to the embodiment shown in Figs. 3 and 4. Two guide bars 5 raise the gambrel to a predetermined height and hold, together with the guide bars 2, the gambrel in a horizontal posiiton, while the guide 10 conveys the gambrel with the carcass sides forwards. The arms 1 have been removed and instead two external guide bars 6 holding the hind feet on the gambrel and simultaneously laterally pressing them towards a vertical position are provided. Two circular saws with slightly inclined blades 7 are mounted below the bars 6 at a fixed distance from the bars 5 carrying the gambrel. When the ham ends of the carcass sides get in contact with the circular saw blades 7, the hind feet are sawed through, whereby the carcass sides fall down onto the conveyor belt 8, after which the carcass sides are conveyed further in a lying position for cutting. Not until after the sawing are the hind feet released from the gambrel, for instance thereby that the gambrel with the hind feet is advanced further on the overhead conveyor 9 and later freed from the hind feet.

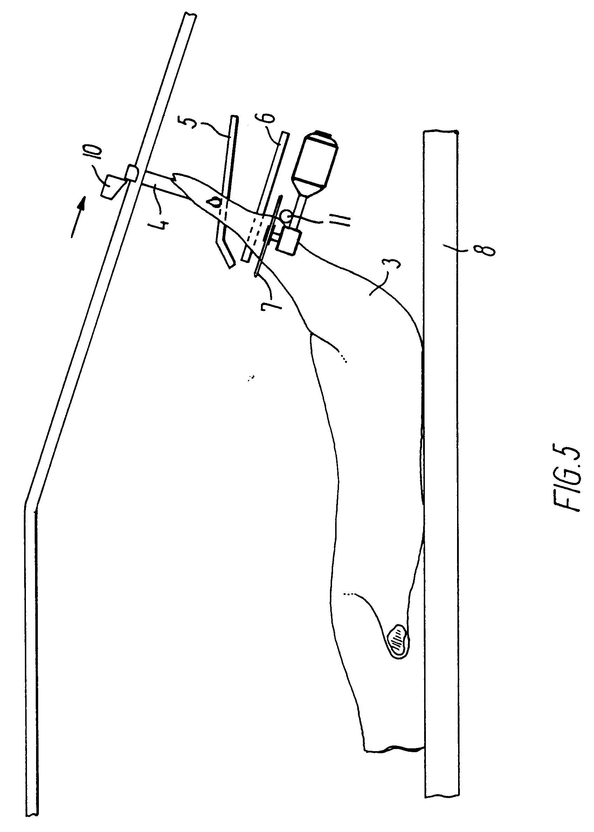

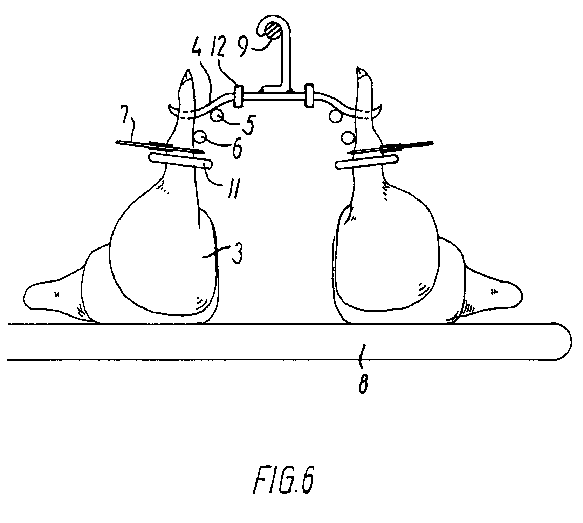

In an alternative embodiment according to the invention the transfer apparatus shown in Figs. 5 and 6 comprises cutting devices which move relative to the suspended carcass sides. For the sake of clarity the same references are used as in Figs. 3 and 4 for analogous parts.

In the same way as in the embodiment according to Figs. 3 and 4 pairs of pig carcass sides suspended at their hind feet on gambrels 4 are conveyed along an overhead conveyor 9 over a conveyor belt 8. The overhead conveyor 9 has in the transfer station shown in Figs. 5 and 6 such a height over the conveyor belt that an essential part of the weight of the pig carcass is transferred to the conveyor belt. The position of the carcass on the conveyor belt is thus determined. It is preferable that the ham or the loin of the carcass in the transfer station, before the release from the gambrel 4 takes place, is raised a few cm over the conveyor belt 8. A certain load in the hind foot in the transfer station is aimed at in order to attain a safe fixation of the foot during the cutting.

By means of two guide bars 5 the gambrel 4 is raised somewhat relative to the overhead conveyor 9 and held in a horizontal position. Furthermore, two internal guide bars 6 are provided, said bars holding the hind feet in correct position on the gambrel and in particular preventing them from moving towards the centre of the gambrel. Two circular saws 7 are ounted at a fixed distance below the bars 5 carrying the gambrel and are suspended in such a way that when activated they can move along a path travelling substantially perpendicular to the vertical plane of the overhead conveyor 9 and their blades are approximately perpendicular to the hind feet. The saws 7 may be suspended to pivot about a shaft running parallelly with the overhead conveyor, or about an approximately vertical shaft. The carcass sides are stopped by the holding means 11 in a predetermined position, whereafter they are brought into an active position preventing further conveyance of the hind feet, and by the holding means 12, which stop the conveyance of the gambrel. While the hind feet are supported by means of the guide bars 6 and the holding means 11, the circular saws 7 are moved towards the hind feet which are sawed through. Then the holding means 11 and 12 are released, which makes the carcass sides fall down onto the conveyor belt. The carcass is conveyed further down the conveyor belt for further cutting in a lying position. The hind feet may be removed from the gambrel 4 now or at a subsequent, preferably automatic operation.

## Claims

1. A method for treatment of pig carcasses (3), in which a pair of carcass sides suspended at their hind feet in a gambrel (4) is conveyed on an overhead conveyor (9), which moves above a conveyor belt, onto which the carcass sides are transferred when released from the gambrel, and by which method the hind feet are automatically cut off, **characterized** in that the hind feet are cut off from the carcass side by a cut running substantially perpendicular to the feet of the carcass side, while the carcass sides are in a position in which an essential part of the weight has been transferred to the conveyor belt and the position of the carcass on the belt has been established, the release of the carcass side being performed by the cut.

2. A method according to claim 1, **characterized** in that the cutting off of the hind feet are carried out by means of circular saws (7) placed below in the traveling path of the gambrel (4), the cutting being effected by the gambrel passing the circular saws.

3. A method according to claim 1, **characterized** in that the cutting of the hind feet is carried out by means of movably mounted circular saws (7), which in a predetermined position of the gambrel (4) are advanced in a direction essentially perpendicular to the vertical plane of the overhead conveyor (9).

4. A method according to claims 1, 2 or 3, **characterized** in that the circular saws (7) during the cutting are positioned at a fixed, predetermined distance from the gambrel.

5. A method according to claims 1, 2, 3 or 4, **characterized** in that the cutting is carried out immediately before the ham of the carcas sides (3) gets in contact with the conveyor belt (8).

6. An apparatus for treatment of pig carcasses 83) and comprising an overhead conveyor (9), along which pairs of carcass sides are conveyed suspended at their hind feet in gambrels (4), and a conveyor belt placed below the overhead conveyor and to which the carcass sides are transferred by release of the carcass sides from the gambrels in a position above the conveyor belt, the overhead conveyor (9) is placed in the area, where the transfer is to take place, at a distance therefrom which corresponds to a shifting of an essential part of the weight of the carcass sides to the conveyor belt (8), **characterized** in that in this area two cutting devices for cutting off the hind feet from the carcass sides are provided.

7. An apparatus according to claim 6, **characterized** in that in the transfer area guiding and/or supporting devices (5,6,11,12) are provided for controlling or holding the gambrel and/or the hind feet relative to the cutting devices (7) during the transfer.

8. An apparatus according to claim 6, **characterized** in that the cutting devices are fixedly mounted below the travelling path of the gambrel (4) along the overhead conveyor (9), and in that guide bars (5) for lifting the gambrel (4) and conveying devices (10) for pulling the gambrel forwards past the cutting devices (7) are provided.

9. An apparatus according to claim 6, **characterized** in that the cutting devices (7) are movable in a direction substantially perpendicular to the vertical plane of the overhead conveyor (9), and in that guide bars (5) fixing and possibly lifting the gambrel (4), supporting devices (6) for preventing movement of the hind feet in the direction towards the middle of the gambrel, as well as holding means (11) adapted to stop conveyance of the hind feet or the hind legs before the cutting, are provided.

## Patentansprüche

1. Verfahren zur Förderung von Schlachtschweinkörpern (3), wobei ein Paar Körperhälften, die an ihren Hinterfüßen in einem Fleischerhaken aufgehängt sind, auf eine obere Transportschiene (9) gefördert wird, die über ein Förderband angeordnet ist, auf welchem die Körperhälfte angebracht werden wenn sie vom Fleicherhaken freigesetzt worden sind, und nach welchem Verfahren die Hinterfüße automatisch abgeschnitten werden, dadurch **gekennzeichnet**, daß die Hinterfüße durch einen im wesentlichen senkrecht auf die Hinterbeine der Körperhälfte verlaufenden Schnitt abgeschnitten werden, während die Körperhälften sich in einer Position befinden, in welcher ein wesentlicher Teil vom Gewicht der Körperhälften auf das Förderband übertragen ist und die Plazierung der Körper auf dem Band festgelegt worden ist, indem die Freisetzung der Körperhälfte durch den Schnitt durchgeführt wird.

2. Verfahren nach Anspruch 1, dadurch **gekennzeichnet**, daß das Abschneiden der Hinterfüße mittels Kreissägen (7) vorgenommen wird, die unter dem Bewegungsbahn des Fleischerhakens (4) angeordnet sind, indem das Abschneiden stattfindet, wenn der Fleischerhaken die Rundsägen passiert.

3. Verfahren nach Anspruch 1, dadurch **gekennzeichnet**, daß das Abschneiden der Hinterfüße von bewegbar angeordneten Rundsägen (7) durchgeführt wird, die in einer vorausbestimmten Position des Fleischerhakens (4) in eine Richtung vorgeführt wird, die im wesentlichen senkrecht auf die senkrechte Ebene der Transportschiene (9) steht.

4. Verfahren nach Anspruch 1, 2 oder 3, dadurch **gekennzeichnet**, daß die Rundsägen (7) während des Schneidens in einem festen, vorausbestimmten Abstand vom Fleischerhaken angeordnet sind.

5. Verfahren nach Anspruch 1, 2, 3 oder 4, dadurch **gekennzeichnet**, daß das Abschneiden unmittelbar bevor der Schinken der Körperhälften (3) mit dem Förderband (8) in Kontakt kommt stattfindet.

6. Vorrichtung zur Behandlung von Schlachtschweinkörpern (3) und umfassend eine Transportschiene (9), entlang welcher Paare von Körperhälften, die an ihren Hinterfüßen in Fleischerhaken (4) aufgehängt gefördert werden, und ein Förderband, das unter der Transportschiene angeordnet ist und auf welchem die Körperhälften durch Freisetzung der Körperhälften von den Fleischerhaken in einer Position über das Förderband übergeführt werden, wobei die Transportschiene (9) in dem Gebiet angebracht ist, wo die Überführung stattfinden soll, in einem Abstand vom Förderband, der einer Verlagerung eines wesentlichen Teils vom Gewicht der Körperhälften auf dem Förderband (8) entspricht, dadurch **gekennzeichnet**, daß zwei Schneidvorrichtungen zum Abschneiden der Hinterfüße der Körperhälften in diesem Gebiet vorgesehen sind.

7. Vorrichtung nach Anspruch 6, dadurch **gekennzeichnet**, daß Steuer- und/oder Unterstützungsmittel (5,6,11,12) in dem Überführungsgebiet vorgesehen sind zum Steuern oder Halten vom Fleischerhaken und/oder den Hinterfüßsen im Verhältnis zu den Schneidvorrichtungen (7) während der Überführung.

8. Vorrichtung nach Anspruch 6, dadurch **gekennzeichnet**, daß die Schneidvorrichtungen fest unter dem Bewegungsbahn des Fleischerhakens (4) der Transportschiene (9) entlang angeordnet sind, und daß Steuerstangen (5) zum Heben des Fleischerhakens (4) und Fördermittel (10) zum Vorwärtsziehen des Fleischerhakens der Schneidvorrichtungen vorbei (7) vorgesehen sind.

9. Vorrichtung nach Anspruch 6, dadurch **gekennzeichnet**, daß die Schneidvorrichtungen (7) in einer Richtung bewegbar sind, die im wesentlichen senkrecht auf die senkrechte Ebene der Transportschiene (9) steht, und dass Steuerstangen (5), die den Fleischerhaken (4) festhalten und vielleicht heben, Unterstützungsmittel (6) zum Verhindern, daß sich die Hinterfüße in Richtung gegen die Mitte des Fleischerhakens bewegen, sowie Halteeinrichtungen (11), die dazu eingerichtet sind, die Förderung der Hinterfüße oder Hinterbeine vor dem Abschneiden zu stoppen, vorgesehen sind.

## Revendications

1. Procédé pour traiter des carcasses de porc (3) par lequel une paire de demi-carcasses suspendues à leur patte arrière dans une bielle de suspension (4) est transportée sur un rail de transport (9) qui s'étend au dessus d'une bande transporteuse, sur laquelle les demi-carcasses sont déposées en étant dégagés de la bielle de suspension et par quel procédé les pattes arrières sont automatiquement découpées, **caractérisé** en ce que les pattes arrières sont découpées de la demi-carcasses par une coupe s'étendant essentiellement perpendiculairement aux pattes de la demi-carcasse, lorsque les demi-carcasses sont dans une position où une partie essentielle du poids a été déposée sur la bande transporteuse et la position de la carcasse sur la bande a été déterminée, le dégagement de la demi-carcasse étant effectué par la coupe.

2. Procédé selon la revendication 1, **caractérisé** en ce que la coupe des pattes arrières est effectuée au moyen de scies circulaires (7) pourvues en dessous dans la voie de mouvement de la bielle de suspension (4), la coupe étant effectuée par ce que la bielle de suspension (4) passent les scies circulaires.

3. Procédé selon la revendication 1, **caractérisé** en ce que la coupe des pattes arrières est effectuée au moyen de scies circulaires (7) montées à pivotement, qui dans une position prédéterminée de la bielle de suspension (4) sont avancées dans une direction essentiellement perpendiculaire au plan vertical du rail de transport (9).

4. Procédé selon les revendications 1, 2 ou 3, **caractérisé** en ce que lors de la coupe, les scies circulaires (7) sont arrangées à une distance fixée et prédéterminée de la bielle de suspension.

5. Procédé selon les revendications 1, 2, 3 ou 4 **caractérisé** en ce que la coupe est effectuée immédiatement avant que la cuisse de la demi-carcasse (3) ne soit en contact avec la bande transporteuse (8).

6. Appareil pour traiter des demi-carcasses (3) et comprenant un rail de transport (9) au long duquel des paires de demi-carcasses sont transportées suspendues par leur patte arrière dans une bielle de suspension (4), et une bande transporteuse arrangée au-dessous du rail de transport et sur laquelle les demi-carcasses sont déposées par le dégagement des demi-carcasses des bielles de suspension à partir d'une position au-dessus de la bande transporteuse, le rail de transport (9) étant arrangé à l'endroit où le dépôt doit être effectué et à une distance de là qui correspond à un déplacement d'une partie essentielle du poids des demi-carcasses à la bande transporteuse (8), **caractérisé** en ce que dans cet endroit, deux dispositifs de coupe sont pourvus pour découper les pattes arrières des demi-carcasses.

7. Appareil selon la revendication 6, **caractérisé** en ce que dans l'endroit de dépôt, des dispositifs de guidage et/ou de support (5,6,11,12) sont pourvus pour diriger ou fixer la bielle de suspension et/ou les pattes arrières par rapport aux dispositifs de coupe (7) lors du dépôt.

8. Appareil selon la revendication 6**, caractérisé** en ce que les dispositifs de coupe sont montés solidement sous la voie de mouvement de la bielle de suspension (4) au long du rail de transport (9), en ce que des barres de guidage (5) sont pourvues pour lever la bielle de suspension (4) et en ce que des dispositifs de déplacement (10) sont pourvus pour tirer la bielle de suspension en avant pour passer les dispositifs de coupe (7).

9. Appareil selon la revendication 6, **caractérisé** en ce que les dispositifs de coupe (7) peuvent se déplacer dans une direction essentiellement perpendiculaire au plan vertical du rail de transport (9), et en ce que des barres de guidage (5) sont pourvues pour fixer et éventuellement lever la bielle de suspension (4), en ce que des dispositifs de support (6) sont pourvus pour empêcher le mouvement des pattes arrières dans la direction vers le milieu de la bielle de suspension, et en ce que des moyens de fixation (11) sont adaptés à arrêter l'avancement des pattes arrières ou des jambes de derrière avant la coupe.
